# EUROPÄISCHE PATENTSCHRIFT

(11) **EP 2 575 480 B1**
(45) Veröffentlichungstag und Bekanntmachung des Hinweises auf die Patenterteilung: **11.05.2016**
(21) Anmeldenummer: 11728200.4
(22) Anmeldetag: 31.05.2011
(51) Int. Cl.: A21D 2/18, A21D 2/26, A21D 2/36, A21D 13/06, A23L 33/00

(54) **Glutenfreie Brotbackmischung**
Gluten-free bakery mix for bread
Composition sans gluten pour la préparation des pains

(30) Priorität: 31.05.2010 DE 102010017171
(43) Veröffentlichungstag der Anmeldung: 10.04.2013
(73) Patentinhaber: Ernst Böcker GmbH & Co. KG, 32427 Minden (DE)
(72) Erfinder: BRANDT, Markus, 32423 Minden (DE); JASPERS, Gina, 31542 Bad Nenndorf (DE)
(74) Vertreter: Fleuchaus, Andrea
(86) Internationale Anmeldenummer: PCT/EP2011/058961
(87) Internationale Veröffentlichungsnummer: WO 2011/151331

(56) Entgegenhaltungen:
- EP-A2- 0 035 978
- EP-B1- 2 001 310
- WO-A1-2006/107809
- WO-A1-2011/062507
- WO-A2-2011/039308
- DE-A1- 3 535 412
- Anonymous: "Schokoladenkuchen glutenfrei-Backmischung-Test", , 21. Mai 2009 (2009-05-21), Seiten 1-2, XP000002657918, Gefunden im Internet: URL:http://de.petitchef.com/rezepte/schoko ladenkuchen-glutenfrei-backmischung-test-f id-315765 [gefunden am 2011-08-29]
- LORENA S. SCIARINI ET AL: "Influence of Gluten-free Flours and their Mixtures on Batter Properties and Bread Quality", FOOD AND BIOPROCESS TECHNOLOGY, Bd. 3, Nr. 4, 20. Juni 2008 (2008-06-20), Seiten 577-585, XP55005828, ISSN: 1935-5130, DOI: 10.1007/s11947-008-0098-2
- RIBOTTA ET AL: "Production of gluten-free bread using soybean flour", JOURNAL OF THE SCIENCE OF FOOD AND AGRICULTURE, WILEY & SONS, CHICHESTER, GB, Bd. 84, Nr. 14, 20. August 2004 (2004-08-20), Seiten 1969-1974, XP002506736, ISSN: 0022-5142, DOI: 10.1002/JSFA.1915
- Bineb70: "Glutenfreies veganes Backen", , 29. Juni 2007 (2007-06-29), Seiten 1-1, XP000002657919, Gefunden im Internet: URL:http://www.wunderkessel.de/forum/backe n-fragen-hilfe/26153-glutenfreies-veganes- backen.html [gefunden am 2011-08-29]
- "The Carbohydrates" In: Ernst J. Pyler: "Baking Science & Technology", 1. Januar 1988 (1988-01-01), Sosland Publishing, Kansas City, XP000002657920, Bd. 1, Seiten 36-38, das ganze Dokument
- G.Eisenbrand, P.Schreier: "Römpp Lexikon Lebensmittelchemie", 1. Januar 1995 (1995-01-01), Thieme Verlag, Stuttgart, XP000002657921, Seiten 644-644, das ganze Dokument
- TILMAN J SCHOBER: "Chapter 9: Manufacture of Gluten-Free Specialty Breads and Confectionery Products", 1. Mai 2009 (2009-05-01), GLUTEN-FREE FOOD, SCIENCE AND TECHNOLOGY,, PAGE(S) 130 - 180, XP009151613, das ganze Dokument
- MORONI A V ET AL: "Sourdough in gluten-free bread-making: An ancient technology to solve a novel issue?", FOOD MICROBIOLOGY, ACADEMIC PRESS LTD, LONDON, GB, Bd. 26, Nr. 7, 1. Oktober 2009 (2009-10-01), Seiten 676-684, XP026583267, ISSN: 0740-0020, DOI: 10.1016/J.FM.2009.07.001 [gefunden am 2009-07-26]

## Beschreibung

Die vorliegende Erfindung betrifft das Gebiet der Lebensmittelerzeugung, insbesondere die Erzeugung und Bereitstellung von glutenfreien Backwaren und Broten.

Zöliakie, auch bekannt als nichttropische oder einheimische Sprue oder glutensensitive Enteropathie, ist eine der am häufigsten auftretenden Lebensmittel Unverträglichkeiten bzw. eine Krankheit, bei welcher der Körper eines betroffenen Patienten auf Gluten, also z.B. die Gliadinfraktion des Weizens und/oder das Prolamin des Roggens (Secalin) und/oder das Hordein der Gerste immunologisch reagiert. Diese Reaktion auf Gluteneinnahme zeigt sich in einer Entzündung des Dünndarms sowie eine Zerstörung des Darmwandepitels und führt damit zu einer Resorptionsstörung.

Die einzige Therapieform, die zur Zeit zur Verfügung steht, ist ein lebenslanger Totalverzicht auf Gluten. Durch den Totalverzicht von Gluten oder Glutenproteinen kommt es zum Abklingen der Entzündung und einer Wiederherstellung der Darmwandepitelien. Durch diesen Totalverzicht sind Zöliakiepatienten nicht in der Lage die gängigsten Lebensmittel aus Weizenmehl, wie z.B. Nudeln, Brot und Backwaren, zu verzehren und müssen sich auf Lebensmittel, die aus Pseudocerealien, also Pflanzen, die keine nähere Verwandtschaft zu Weizen haben und z.B. aus Sorghum, Hirse, Zwerghirse, Fingerhirse und Hiobs-Träne, Buchweizen, Amaranth sowie Quinoa hergestellt wurden, einschränken. Da schon kleinste Verunreinigungen mit Gluten in Lebensmitteln extreme Folgen für Zöliakiepatienten haben, ist es wichtig zur Herstellung von glutenfreien Lebensmitteln eine klare Definition für "glutenfrei" zugrunde zu legen und entsprechende Richtlinien in der Herstellung der Backwaren zu befolgen.

Die Codex Alimentarius Kommission der Weltgesundheitsorganisation (WHO) und die Food and Agricultural Organisation (FAO) setzten daher einen Standard für die Verwendung des Begriffs "glutenfrei" fest. Danach werden als "glutenfrei" bezeichnet: (a) Lebensmittel bestehend aus oder hergestellt einzig unter der Verwendung von Rohstoffen, die keinerlei Prolamine von Weizen oder sonstigen Triticum Arten, wie Dinkel (Triticum spelta L.), Kamut (Triticum polonicum L.) oder Hartweizen, Roggen, Gerste, Hafer oder deren Kreuzungen mit einem Glutengehalt von weniger als 20 ppm aufweisen, (b) Lebensmittel bestehend aus Rohstoffen von Weizen, Roggen, Gerste, Hafer, Dinkel, oder deren Kreuzungen, welche als glutenfrei bezeichnet werden können, wenn sie durch entsprechende Prozessschritte auf einen Glutengehalt von weniger als 20 ppm reduziert wurden.

Die Europäische Kommission ist den Vorschlägen der Codex Alimentarius Kommision weitgehend gefolgt und hat die Grenzwerte in Verordnung 41/2009 übernommen. Lebensmittel aus Weizen, Roggen, Gerste oder Hafer beziehungsweise deren Kreuzungen, die mit einem den Glutengehalt absenkenden Verfahren behandelt wurden dürfen nach dieser Verordnung mit "sehr geringer Glutengehalt" bezeichnet werden, sofern der Glutengehalt <100 ppm ist.

Im Rahmen der nachfolgend beschriebenen Erfindung ist der Begriff "glutenfrei" im Sinne dieser Definition zu verstehen.

Gluten ist ein Speicherprotein im Weizenmehl und enthält die Proteinfraktionen Glutenin und Gliadin. Verarbeitet in Teigen zeigt Gluten kohäsive, elastische und viskose Eigenschaften und bildet eine Matrix, die die Haupteigenschaften von Teigen (Ausdehnbarkeit, Dehnungswiderstand, Mischungstoleranz, Gashalte- und Gasbindevermögen) ausmacht und in welcher die Stärkekörner sowie die Ballaststoffe eingeschlossen werden. So erfolgt die Wasseraufnahme des Mehls in erster Linie durch die Proteine Gliadin und Glutenin. Die Proteinmatrix wird durch beim Kneten auftretende Scherkräfte gedehnt und zusammen mit Quellungs- und Lösungsvorgängen treten Strukturveränderungen an den Proteinen auf. Strangartig vorliegendes Glutenin und Gliadin wird gestreckt und an den Verzweigungspunkten dieser Stränge kommt es durch inter- und intramolekulare Bindungen zur Ausbildung eines durchgängigen dreidimensionalen Proteinmatrix und damit zur Kleberbildung. Diese Matrix stellt in einem optimal gekneteten Teig das vorherrschende Strukturelement dar und trägt maßgeblich zum Gashaltevermögen, sowie zur Gärtoleranz des Teiges bei. In diese Klebermatrix eingelagert befinden sich Stärkepartikel, die, durch den Knetvorgang befördert, zu einer kontinuierlichen Struktur zusammenhaften. Durch das Erhitzen während des Backvorgangs können Amylose und Amylopektin verstärkt in Lösung gehen, gleichzeitig diffundiert Wasser in die Partikel, bis diese schließlich reißen. Durch Interaktion denaturierter Proteine mit aufgequollener und partiell verkleisterter Stärke entsteht beim Backen ein stabiles Krumengerüst.

Das Weglassen des Glutens bildet insbesondere bei der Herstellung von entsprechenden glutenfreien Backwaren ein technologisches Problem. Die Herstellung von glutenfreien Broten stellt dabei die größte Herausforderung dar, da Weizengluten gleich mehrere Aufgaben bei der gelungenen Brotherstellung übernimmt und viele Zusatzstoffe benötigt werden, um dieses zu ersetzen.

Glutenfreie Brote wurden zum Beispiel auf der Basis von Reismehl hergestellt. Reismehl eignet sich als Mehlersatzstoff dabei insbesondere durch einen unaufdringlichen Geschmack, die weiße Farbe, seine hypoallergenen Eigenschaften sowie seine gute Verträglichkeit. Allerdings haben die im Reismehl enthaltenen hydrophoben und unlöslichen Proteine kaum visko-elastische Eigenschaften, die den Aufbau eines Proteingerüstes erlauben und somit ein Gashaltevermögen im Hefe-versetzten, gekneteten Teig bedingen könnten. Reisbrote weisen daher keine weiche und lockere Struktur auf, sondern sind kompakt und sehr fest.

Zur Verbesserung der Brotqualität schlägt JP 2003-169593A ein Verfahren zur Brotherstellung vor, in welchem glutenfreies Mehl mit einem behandelten Glutenextrakt oder behandelten Weizenmehl, welches durch die Behandlung seine allergenen Eigenschaften verloren oder weitgehend verloren hat, versetzt wird, um die gewünschten Klebereigenschaften im Brotteig zu erzielen. Zöliakiepatienten können solches Brot allerdings nicht bedenkenlos zu sich nehmen.

Alternativ führt auch der Zusatz von Struktur-verbessernden Agenzien wie Hydrokolloiden, Xanthan, Carboxymethylcellulose (CMC), Hydroxypropylmethylcellulose (HPMC) (e.g. US 2010/0021610 A1), Pektin, Guarkernmehl, Johannisbrotkernmehl oder Agarose zu verbesserten Brotbackergebnissen nicht nur auf Reismehlbasis. Allerdings bleibt zu beachten, dass der Zusatz von Hydrokolloiden nur die Wasserbindeeigenschaften des Teiges verändert, so dass mehr Wasser dem Teig zugesetzt werden muss, welches dann während des Backvorganges an die Stärke abgegeben wird. Durch den erhöhten Wasserzusatz ist der Teig flüssiger und kann nur in Backformen gebacken werden. Auch wenn durch solche Zusätze Reisbrot saftiger wird, kann durch den Zusatz von Hydrokolloiden keine Struktur aufgebaut werden, die Gas zurückhält und somit zu lockerem Brot mit Krume führt. Das Ergebnis ist vielmehr Kuchen-ähnlich und weist daher immer noch mangelhafte Broteigenschaften z.B. ein unbefriedigendes Mundgefühl und zum Teil erhebliche Geschmacksbeeinträchtigungen auf.

WO 2008/022092 offenbart den Zusatz von diversen Struktur-verbessernden und Gaszurückhaltenden sowohl natürlichen wie synthetischen Polymeren, welche die Klebereigenschaften des Weizen besser simulieren sollen und so zur Verbesserung der Herstellung von glutenfreien Produkten führen sollen. Auch wenn durch solche Zusätze glutenfreie Produkte lockerer würden, weisen sie immer noch mangelhafte Broteigenschaften z.B. ein unbefriedigendes Mundgefühl und zum Teil erhebliche Geschmacksbeeinträchtigungen auf. Darüber hinaus ist der Zusatz von solchen Polymeren verhältnismäßig teuer und nur teilweise vom Verbraucher akzeptiert.

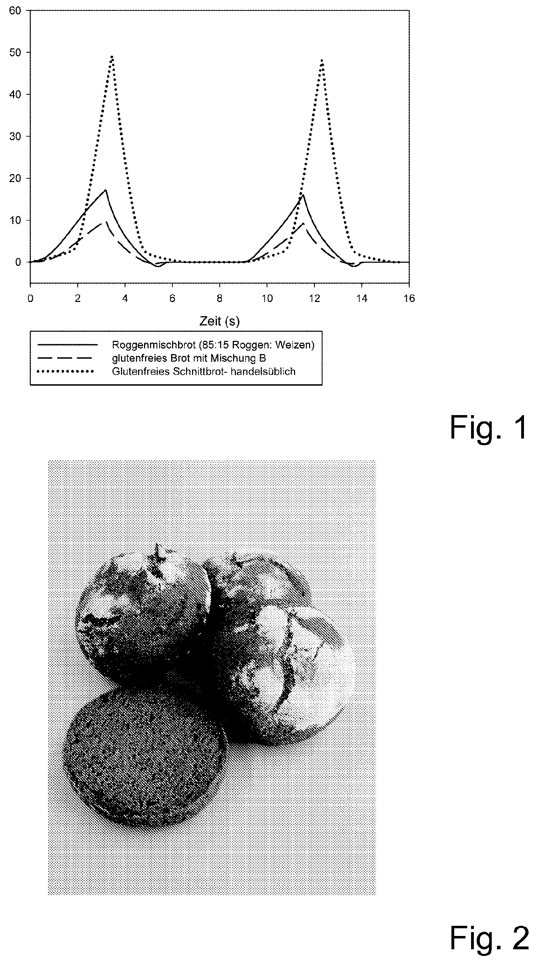

Die Studie von Sciarini et al. 2008 (Food and Bioprocess Technology 3, p. 577-585) untersucht den den Einfluss von verschiedenen glutenfreien Mehlen auf der Basis von Reis, Mais und Sojabohnen und Mischungen von diesen auf das Backverhalten und die Klebereigenschaften von glutenfreien Backwaren und die Qualität des generierten Brotprodukts. Die dort beschriebenen Teigrezepturen enthalten hierzu vorrangig Reis-/Maismehl und nur geringe Anteile Sojabohnenmehl und führen zu Backwaren, die alle in Formen gebacken werden (vgl. Fig. 2).

Ribotta et al. 2004 (J Sci Food Agric 84, p. 1969-1974) beschreibt gleichsam die Bereitstellung von glutenfreien Backwaren hier auf der Basis von Reis-, Maniok- und Sojabohnenmehl. Ribotta *et al.* zeigt dabei unter anderem, dass der Sojabohnenmehleinsatz zu einer Verbesserung der Stabilität und Luftinklusion in den Backwaren führen kann (vgl. Fig. 1 und Fig. 2).

DE 35 35 412 Allehrt die Herstellung von glutenfreiem Natursauerteig zur Brotherstellung. Das zur Sauerteigherstellung verwendete Mischmehl enthält hierzu ca. sechs Gewichtsanteile Maisstärke, ca. drei Gewichtsanteile Maismehl und ca. ein Gewichtsanteil Kastanienmehl.

Auch diese Druckschrift, wie bereits die beiden vorangegangenen Veröffentlichungen beschreiben ein Backerzeugnis, dass von seiner Konsistenz und Sensorik einem typischen Brot nahe kommen soll, allerdings weisen alle beschriebenen Backerzeugnisse immer noch unzureichende Broteigenschaften auf.

In Anbetracht der oben beschriebenen Nachteile besteht nach wie vor das Bedürfnis die Herstellungsverfahren bzw. die Zusammensetzungen zur Herstellung von qualitativ hochwertigen glutenfreien Backwaren zu verbessern. Insbesondere besteht nach wie vordas Bedürfnis glutenfreies Brot herzustellen, dessen lockere Struktur bei bißfester Krume ein befriedigendes Mundgefühl vermittelt und darüber hinaus schmackhaft ist.

Daher haben sich die Erfinder es zur Aufgabe gemacht Zusammensetzungen zur Herstellung von qualitativ hochwertigen, glutenfreien Backwaren, insbesondere Brote bereitzustellen, welche verbesserte Broteigenschaften, eine locker Struktur und knackige Krume und ein befriedigendes Mundgefühl haben und sich darüber hinaus auch als freigeschobene Brote herstellen lassen. Hierbei wurde in Betracht gezogen, dass im Gegensatz zu Weizen Roggenproteine nicht in der Lage sind ein derartiges Klebernetzwerk aufzubauen; Im Roggenmehlbrot erfolgt die Wasserbindung und Teigausbildung über Pentosane. Es war Anliegen der Erfinder abseits der zahlreichen vorhandenen Rezepturen zur Imitation von Weizengebäcken mit Hilfe zugesetzter Hydrokolloide ein glutenfreie Mehlmischung bereitzustellen, die technologisch mit Roggenmehl vergleichbar ist.

Im Rahmen der Erfindung wird daher eine glutenfreie Backmischung bereitgestellt, die wenigstens eine glutenfreie Stärkequelle und wenigstens eine glutenfreie Pentosanquelle enthält. wie in den Ansprüchen definiert.

Idealerweise entspricht das Verhältnis von Stärke:Pentosan einem Verhältnis von wenigstens 8:1. Backmischungen werden üblicherweise aus Mehl und weiteren Zusätzen hergestellt, im Rahmen der vorliegenden Anmeldung werden regelmäßig Bestandteile der Backmischung aufgezählt ohne immer explizit hinzu zu fügen, dass es sich um 'vermahlene', in anderen Worten zu Mehl gemahlene Bestandteile handelt.

Im Rahmen der Erfindung wird daher ein Mahlgrad der eingesetzten Bestandteile und der Pentosanquelle mit einer Feinzerkleinerung von <500 µm angestrebt, da dadurch die Wasseraufnahme beschleunigt wird. Bei der beanspmchten glutenfreien Backmischung entspricht das Verhältnis von Stärke zu Pentosan wenigstens 8:1, wenigstens 10:1, wenigstens 15:1, wenigstens 20:1, wenigstens 25:1 und/oder wenigstens 30:1. Backmischungen mit einem Stärke zu Pentosan Verhältnis von 8:1 entwickeln beim Backen sehr luftigen Strukturen da sich eine stabile Gas-zurückhaltende Matrix ausbildet. Allerdings kann - sofern der Backvorgang ungünstig verläuft - die Kruste zu weit angehoben werden und die Krume dann abreißen. Backmischungen mit einem Stärke zu Pentosan Verhältnis von 10:1 bis 15:1 sind ideal und damit bevorzugt, denn es entwickelt sich eine lockere, jedoch noch kleinporige und kompakte Brotstruktur, die Krume wird bißfest und bleibt mit dem Laib verbunden. Backmischungen mit einem Stärke zu Pentosan Verhältnis von 20:1 bis 30:1 entwickeln eine sehr lockere und großporige Brotstruktur, die an Weizenbrote erinnert.

Um die Glutenfreiheit zu garantieren und jegliches Risiko für Zöliakiepatienten auszuschließen, und um ferner den Begriff "glutenfrei" im Rahmen der vorliegenden Anmeldung zu definieren wird festgelegt, dass die in der erfinderischen Mischung enthaltenen Stärke- oder Pentosanquellen gemäß der Codex Alimentarius Kommission der Weltgesundheitsorganisation (WHO) und der Food and Agricultural Organisation (FAO) maximal einem Glutengehalt von 20 ppm aufweisen. Gleichzeitig schließt jedoch der Begriff "glutenfrei" im Rahmen der vorliegenden Anmeldung die Verwendung von prozessierten Stärke- oder Pentosanfraktionen aus Weizen, Roggen oder Gerste, die so behandelt wurden dass kein Gluten im Sinne der obigen Definition nachweisbar ist, ein. Im Rahmen der vorliegenden Anmeldung bedeutet "Stärke" pflanzliche Polysaccharide, die aus D-Glucose-Einheiten bestehen, die über glykosidische Bindungen miteinander verknüpft sind. Stärke besteht zu 20-30 % aus Amylose, linearen Ketten mit helikaler (Schrauben-) Struktur, die nur α-1,4-glykosidisch verknüpft sind und zu 70-80 % aus Amylopektin, stark verzweigten Strukturen, mit α-1,6-glykosidischen und α-1,4-glykosidischen Verknüpfungen.

Wie in den Ansprüchen beansprucht wird wenigstens eine Stärkequelle ausgewählt aus der Gruppe bestehend aus vermahlener Maisstärke, Kartoffelstärke auch Süßkartoffelstärke, Reisstärke, Erbsenstärke, Maniokstärke (Tapioca, Cassava), Sorghumstärke, Pfeilwurzstärke, Sagostärke sowie Mischungen derselben.

Natürlicherweise enthält die Rohstoffpflanze die nachfolgend angegebenen Stärkekonzentrationen in den genutzten Pflanzenteilen: Reis enthält 89 % Stärke, Kartoffeln enthalten 82 % Stärke, Mais enthält 71 % Stärke, Maniok enthält 77 % Stärke, Erbsen enthalten 40 % Stärke, Sorghum enthält 74 % Stärke.

Zur Kontrolle des Stärkegehaltes eines Ausgangsproduktes oder auch von Mischungen von Ausgangsprodukten sowie der Backmischung, kennt der Fachmann Verfahren z.B. AOAC Methode 996.11, AACC 76.13, ICC Standard Methode Nr. 168 mit dem der Stärkegehalt eines Produktes bestimmt werden kann. Ausgehend vom gemessenen oder errechneten Stärkegehalt kann die erfinderische Backmischung in ihrer bevorzugten Zusammensetzung ausgehend von jedem Ausgangsprodukt betreffend das Verhältnis von Stärke zu Pentosan eingewogen werden. Im Rahmen der vorliegenden Anmeldung bedeutet "Pentosan" aus Arabinose und Xylose bestehende Hemicellulosen, die auch Arabinoxylane heißen können. Arabinoxylane bestehen aus einer geraden Kette von β-(1→4) glycosidisch verknüpften Xyloseeinheiten an der zumeist α-L Arabinosereste an Position 2 und/oder 3 hängen. Daneben gibt es in natürlichen Vorkommen auch aus β-(1→3) und β-(1→6) verknüpften Galactoseeinheiten aufgebaute Pentosane, sowie in geringer Menge auch hochverzweigte Arabinogalactane. Pentosane sind in vielen pflanzlichen Bestandteilen vornehmlich aber in Randschichten des Samenkorns zu finden. Roggen enthält 6-8% Pentosan, Weizen 2-3% Pentosan.

Gemäß den Ansprüchen wird wenigstens eine Pentosanquelle ausgewählt aus der Gruppe bestehend aus synthetisch erzeugten Pentosanen, aus Pflanzenteilen aufgereinigten Pentosanen und aus vermahlenen Pflanzenteilen mit hohem Pentosangehalt wie z.B. Maisschalen, Maiskleie, Maisölpressrückstände, Rapsölpressrückstände, Reisspelzen, Sonnenblumenkernen, Sonnenblumenölpressrückstände, Kürbiskernen, Kürbiskernölpressrückstände , Leinsamen, Leinölpressrückständen, Hanfsamen, Sojamehl, Quinoamehl und -kleie, Amaranthmehl, Sorgummehl, Kaffeebohnenmehl, Karottenmehl.

Besonders bevorzugt wird gemäß einer weiteren Ausführungsform entfettetes Mehl, welches aus den Pressrückständen von zur Ölproduktion verwendeten Samen, sogenannten Ölsamen, und/oder Ölpflanzen, wie Sonnenblumenkernen, Maiskörnern, Leinsamen, Hanfsamen, Kürbiskernen, Kaffeebohnen oder Sojabohnen, hergestellt wird, als Pentosanquelle in der Backmischung gemäß der Erfindung eingesetzt.

In der Literatur wird angegeben, dass die Rohstoffpflanze die nachfolgend angegebenen Pentosankonzentrationen in den genutzten Pflanzenteilen enthält: Mais enthält 35 % Pentosan, Reishülsen enthalten 17 % Pentosan, Leinsamen (entfettet) enthalten 22 % Pentosan, Kaffee enthält 11,5 % Pentosan, Soja (entfettet) enthält 6,9% Pentosan.

Der Pentosangehalt der Rohstoffpflanzen kann auch mit im Stand der Technik bekannten Verfahren, z. B. beschrieben bei Hashimoto et al. 1987 (Cereal Chemistry 64, p. 30-34), ermittelt werden. Allerdings fanden die Erfinder deutliche Abweichungen im gemessenen Pentosangehalt verglichen mit den Literaturwerten. Es wird daher im nachfolgenden jeweils der theoretische (dem Literaturwert entsprechende) und der tatsächlich in der Backmischung vorliegende Pentosangehalt angegeben.

Ausgehend vom errechneten Pentosangehalt kann die erfinderische Backmischung in ihrer bevorzugten Zusammensetzung ausgehend von jedem Ausgangsprodukt betreffend das Verhältnis von Stärke zu Pentosan eingewogen werden.

Rechnerisch enthält daher gemäß einer Ausführungsform die erfindungsgemäße Backmischung eine Gesamtmenge von 2,5-25% Pentosan, was einer absolute Pentosamenge von mindestens 25 -250g Pentosan pro kg Backmischung entspricht. Um eine Gesamtmenge von rechnerisch 25% Pentosan zu erhalten, ist es nötig zusätzlich zu den natürlichen pentosanhaltigen Rohstoffen entsprechende Mengen isolierten und aufgereinigtem Pentosan zu geben. Es sei hier daraufhingewiesen, dass es große Abweichungen in den verschiedenen Veröffentlichungen zu der natürlich in Rohstoffen enthaltenen Pentosanmengen gibt. Je jünger eine Publikation, desto niedriger der angegebene Pentosangehalt für vergleichbare Rohstoffe.

Um diese Diskrepanz darzustellen wurden Versuchsergebnisse bezüglich ihres errechneten und ihres gemessenen Pentosangehaltes verglichen. Daher enthält die beanspruchte Backmischung gemäß einer weiteren Ausführungsform, bei welcher Messergebnisse nach dem Hashimoto Verfahren zum Pentosangehalt der Backmischung zugrunde gelegt werden, mindestens 0.25% Pentosan, vorzugsweise zwischen 0,25 und 1% Pentosan, weiter vorzugsweise 1 bis 2,5% Pentosan pro kg Backmischung.

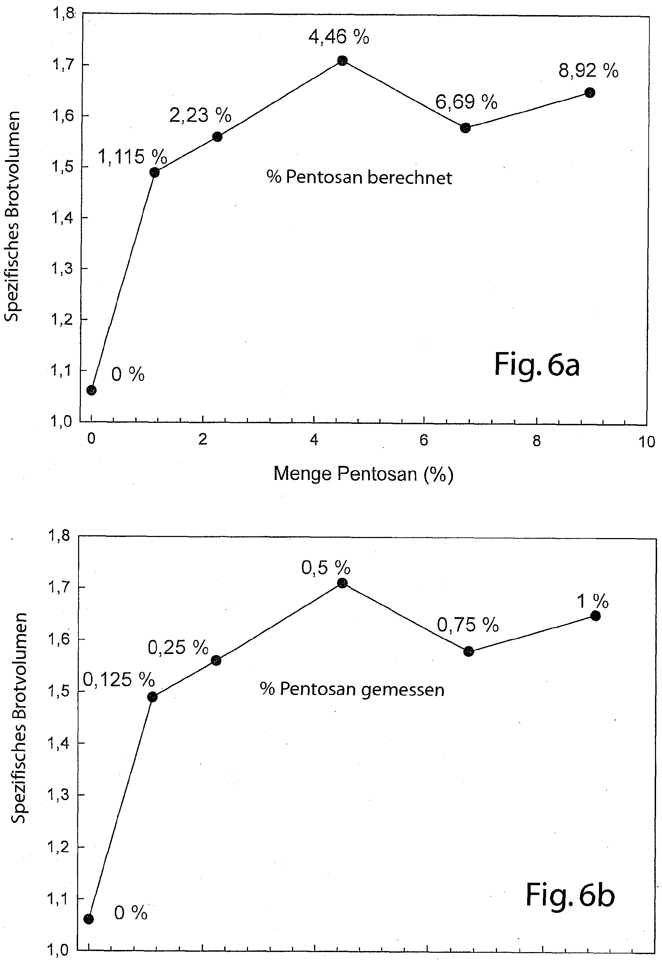

Es hat sich bei den durch die Erfinder durchgeführten Versuche gezeigt, dass bereits bei einer tatsächlich gemessenen Menge an Pentosan von 0,25% - was vergleichbar ist mit 2,5% gerechneten Pentosangehalt - eine gute bis sehr gute spezifische Teig-Volumenentwicklung gezeigt werden kann (vergl. Fig 6), was zu einem lockeren und sensorisch ansprechendem Brot führt. Brote mit diesem Pentosangehalt sind bereits frei schiebbar.

Eine Steigerung der Pentosanmenge von bis zu 1% (gemessen) - was vergleichbar ist mit ca. 9-10% gerechnet - führt zu keiner weiteren Verbesserung der spezifischen Volumenentwicklung. Allerdings führen Pentosanmengen von 1% bis 2,5% (gemessen) - was vergleichbar ist mit ca. 9% bis ca. 22% gerechnet - zu einer weiteren Steigerung der Wasseraufnahme und dem Wasserhaltevermögen im Teig und damit zu einem sensorisch Empfinden von saftig und damit frischem Brot. Brote mit diesem Pentosangehalt sind ebenfalls frei schiebbar.

Bei Pentosanmengen von über 2,5% gemessen - vergleichbar mit über 25% gerechnet - wird das Brot 'ballend', mit anderen Worten die weitere Steigerung des Wasserhaltevermögens führt zu Brot das unangenehm am Gaumen klebt.

Gemäß weiterer Ausführungsformen wird eine Backmischung bereit gestellt, die zusätzlich zu dem eingestellten Stärke:Pentosan Verhältnis von 8:1 bis 30:1, auch noch so eingestellt wird, dass vorzugsweise wenigsten 25%, weiter vorzugsweise 25-30%, weiter vorzugsweise 30-35%, weiter vorzugsweise 35-40%, weiter vorzugsweise 40-50%, weiter vorzugsweise 50-70% Stärke im Mehl nachweisbar ist. Der Gesamtstärkenachweis kann mit im Stand der Technik bekannten Verfahren und z.B. der AOAC Methode 996.11, AACC 76.13, ICC Standard Methode Nr. 168 durchgeführt werden.

Es ist zwar auch möglich aus Rezepturen mit einem Stärke:Pentosan Verhältnis von 8:1 und nur 10% Gesamtstärke Brote zu backen, jedoch zeigt sich, dass solche Brote während der Gare und des Backvorganges eine zu geringe Volumenvergrößerung zeigen und somit in ihrer Konsistenz zu kompakt werden. Ab einer Gesamtstärkemenge von 25% in Kombination mit dem erfinderischen Verhältnis von Stärke:Pentosan führt das Backergebnis zu lockeren Broten mit krosser Krume und angenehmer Sensorik der Brotstruktur.

Zusätzlich enthält die glutenfreie Backmischung gemäß einer weiteren Ausführungsform wenigstens eine glutenfreie Proteinquelle. Vorzugsweise wird von der glutenfreie Proteinquelle eine Menge zugegeben, die dazu führt dass in der fertigen Backmischung und/oder in der fertigen Backware ein Proteingehalt von 5-10% vorliegt.

Der Proteingehalt eines Ausgangsproduktes, der Backmischung und/oder der fertigen Backware kann mit dem Fachmann bekannten Verfahren, z.B. der Stickstoffbestimmung nach Kjeldahl (ICC-Standard 105/1, ICC-International association for Cereal Science and Technology, Vienna, Austria) oder Dumas (ICC-Standard 167) ermittelt bzw. nachgewiesen werden. Der Anteil der einzuwiegenden Proteinquelle kann somit vom Fachmann leicht errechnet werden.

Gemäß weiterer Ausführungsformen wird wenigstens eine Proteinquelle ausgewählt aus der Gruppe bestehend aus vermahlenen Lupinien, vermahlenen Kichererbsen, vermahlenen Bohnen und vermahlenen Ackerbohnen, Milchpulver, Molkepulver, Trockenei oder Mischungen derselben. Die zugesetzte Proteinquelle unterstützt die Strukturbildung und damit das Gashaltevermögen im Teig sowie in der daraus hergestellten Backware.

Für die Backmischung gemäß der vorliegenden Erfindung werden die Bestandteile, nämlich die ausgewählte Pentosanquelle, die ausgewählte Stärkequelle und optional auch die ausgewählte Proteinquelle, die alle als ausgemahlenes Mehl vorliegen, im trockenen Zustand vermischt. Bei der Pentosanquelle ist eine Feinzerkleinerung < 500 µm beansprucht da dadurch die Wasseraufnahme beschleunigt wird. Gemäß einer bevorzugten Ausführungsformen liegt das ausgemahlene Mehl der ausgewählten Pentosanquelle als entfettete Leinsaat mit einem Feinzerkleinerungsgrad von < 500µm vor. Weiter liegt gemäß dieser bevorzugten Ausführungsform das ausgemahlene Mehl der ausgewählten Stärkequelle z.B. der Maisstärke oder Kartoffelstärke mit einem Feinzerkleinerungsgrad von < 400 µm vor. Weiter liegt gemäß dieser bevorzugten Ausführungsform das ausgemahlene Mehl der ausgewählten Proteinquelle z.B. der Bohnen mit Feinzerkleinerungsgrad von < 500 µm vor.

Gemäß dem Verfahren zur Herstellung von glutenfreien Backwaren und Broten wird die Backmischung zunächst mit Salz, Hefe und Wasser vermischt. Üblicherweise, wobei hiervon dem Fachmann überlassene Abweichungen möglich sind, werden dabei der Backmischung ca. 1,5-3% Salz und 2-5% Hefe zugesetzt. Der Teig wird zB. für 5 Minuten im Spiralkneter gemischt und nach weiteren 3 Minuten Ruhezeit zu Brotlaiben von üblicherweise 1000g geformt. Alternativ können auch weichere Teige mit einer höheren Teigausbeute geführt werden, welche dann im Kasten gebacken werden. Typischerweise werden solche Laibe oder Kastenbrote für 60 Minuten bei anfangs 240°C und später 210°C ausgebacken. Darüber hinaus sind dem Bäcker als Fachmann auch alternative Teigzubereitungen und Ausbackprotokolle z.B. ein Fertigstellen in der Mikrowelle bekannt.

Sofern zusätzlich zur Hefe oder anstelle der Hefe als Backtriebmittel Sauerteig eingesetzt wird, so kann bis zu 40 Gew.% der Mehlmischung als Sauerteig eingesetzt werden. Ferner wurde eine Fermentationszeit von üblicherweise 12-24 Stunden, vorzugsweise 16-18 Stunden und bei üblicherweise 22°-30°C, vorzugsweise 25°-28°C eingehalten.

Sauerteig ist üblicherweise eine aus Mehl und Wasser hergestellte Mischung, die mit Hilfe von Laktobazillen fermentiert ist. Im Rahmen der vorliegenden Anmeldung wird der Sauerteig aus glutenfreien Mehlen hergestellt. Vorzugsweise werden die oben erwähnten Pentosanquellen oder Mischungen derselben hierfür eingesetzt. Dann wird die Mehl-Wassermischung mit einer Sauerteig Starterkultur versetzt, die vorzugsweise - jedoch nicht ausschließlich - Lactobacillen ausgewählt aus der Gruppe *Lactobacillus plantarum, L.fermentum, L.paracasei, L.paralimentarius, L.helveticus, Leuconostoc argentinum* und *Saccharomyces pastorianus* enthält.

Durch das gemäß des Anspruch 1 eingestellte Pentosan:Stärke Verhältnis der erfinderischen Backmischung zeigt sich schon beim Anrühren und Kneten der Teige aus der erfindungsgemäßen Backmischung, dass diese es ermöglichen einen Teig herzustellen, der auch ohne den Zusatz von Hydrokolloiden in der Lage ist das Wasser zunächst zu binden und dieses dann langsam (vornehmlich während des Backvorganges) an die abbindende Stärke abgeben. Damit wird erreicht dass bereits ohne den Proteinanteil eine Struktur entsteht, die in der Lage ist durch Teiggärung entstandene Gase zurückzuhalten und damit eine lockere und saftige Brotzusammensetzung ausbildet. Die so erhaltenen Brote zeichnen sich auch durch eine verbesserte, bißfeste Krume aus, und unterscheiden sich damit deutlich von bekannten glutenfreien Produkten aus Pseudoceralien, die meistens kuchenähnlich sind.

Diese lockere und saftige Brotstruktur wird zusätzlich verbessert durch den Zusatz von einer Proteinquelle, die dazu beiträgt, dass verbesserte Gas-zurückhaltende Strukturen beim Ausbacken entstehen. Die so erhaltenen Brote zeichnen sich noch deutlicher durch eine verbesserte, krosse Krume aus, und unterscheiden sich damit deutlich von bekannten glutenfreien Produkten aus Pseudoceralien, die meistens kuchenähnlich sind.

Die Verbesserung der Brotstruktur ist auch objektiv messbar. Hierzu wird üblicherweise eine Textur Profil Analyse (TPA) und damit eine Charakterisierung der Krumentextur durchgeführt. In Anlehnung an die AACC Methode 74-09 (American Association of Cereals Chemists, St.Paul, Minnesota werden über einen Penetrationstest mit einem Aluminiumzylinder (Durchmesser 36mm) Krumen-beschreibende Parameter, wie zum Beispiel Krumenhärte (N) und Krumenelastizität (%), bestimmt.

Der Aluminiumstempel fährt in insgesamt zwei Zyklen mit konstanter Geschwindigkeit (0,80 mm/sec) in die Brotscheibe (Dicke: 1,6 mm) und komprimiert diese bis zu einer Verformung von 20% und fährt anschließend wieder aus der Brotscheibe, bis zum Erreichen ihrer Oberfläche, heraus. Die Kraft (N), welche zur Kompression und Re-Kompression der Brotscheibe aufgewendet werden muss, wird gemessen und aufgezeichnet. Die hierbei entstehenden Daten werden in einem Diagramm in Abhängigkeit zur Zeit (s) dargestellt und es entstehen für die TPA Analyse charakteristische Kurvenverläufe, welche beschreibend für die Textur von Lebensmitteln sind. Die aufzuwendende Kraft, um die Krume um 20% zu komprimieren ist hier als Krumenhärte definiert.

Die mit der Backmischung gemäß der Erfindung hergestellten Brotbackwaren zeigen im Vergleich mit handelsüblichen glutenfreien Backwaren durchweg deutlich verbesserte Krumeneigenschaften. Sie haben eine Roggenbrot-ähnliche Krume und sind in ihrer Textur weicher und elastischer als handelsübliche glutenfreie Backwaren. Im Vergleich zu einem normalen Roggenmischbrot ist die TPA sehr ähnlich, wenn auch das mit der Backmischung der vorliegenden Erfindung hergestellte Brot etwas weicher als handelsübliches Roggenmischbrot ist. Siehe z.B. Figur 1.

Zur Herstellung von Brotbackwaren wird die erfindungsgemäße Backmischung mit Wasser, Salz und wenigstens einem Backtriebmittel angerührt. Im Rahmen der Erfindung werden allgemein die Rohstoffe abgewogen und in einen Spiralkneter eingebracht. Standardmäßig wird eine Knetzeit von ca. 5 Minuten eingestellt. Soweit keine speziellen Angaben gemacht werden, werden alle Teige 5 Minuten langsam geknetet. Anschließend werden die Teige zu jeweils 1000g abgewogen. Die Arbeitsplatte wird mit Stärke eingestaubt, damit die Teige beim Rundwirken nicht an der Arbeitsplatte haften bleiben. Nach der Gare oder Ruhezeit werden die Brote oder Teiglinge im Ofen oder in der Mikrowelle mit üblichen Backtemperaturen und Zeiten gebacken bzw. fertiggestellt, wobei ein spezifisches Brotvolumen von mindestens 1,2 ml/g erreicht wird und bei freigeschobenen Broten ein Breite-Höhe-Verhältnis von mindestens 1,5 erreicht wird. Mit den oben genannten Backmischungen ist es daher erstmalig möglich glutenfreie Brotbackwaren zu erzeugen, die mit Roggen- und Roggenmischbrot vergleichbare Eigenschaften haben und sogar als freigeschobene Brote hergestellt werden können.

Der Begriff "freigeschobene Brote" bedeutet im Rahmen der Anmeldung wie auch in der Sprache der Bäcker, dass die Brote nicht in Kasten- oder sonstigen Formen gebacken werden, sondern dass der Teigling frei und ohne Begrenzung auf ein Blech gesetzt bzw. in den Ofen eingebracht wird und dort bäckt ohne dass seine Randbereiche von Hilfsmitteln gestützt werden. Am freigeschobenen Brot ist die Qualität der Brotstruktur am leichtesten zu beurteilen. So bedeutet z.B. ein Zerlaufen während der Gare oder des Backvorganges, dass die Teigstruktur unzureichend ausgebildet wurde und nicht ausreichend "Stand" hat. Bei Weizen ist das ein Indiz dafür, dass das Klebernetzwerk so stärk geschädigt wurde, dass es "breitläuft".

Zur Charakterisierung dieser Größe und hat Hoseney (Principles of cereal science,1986, American Association of Cereal Chemists, St. Paul, Minnesota) die spread ratio (Ausbreitungrate) eingeführt. Sie ist definiert als das Verhältnis von Breite:Höhe eines Teiglings.

Das spezifische Brotvolumen ist eine Kenngröße zur Charakterisierung von Mehlen. Sie errechnet sich aus dem Volumen des Brotes / Brotgewicht und liegt für Roggenbrote bei 1,9-2,4 und für Weizenbrot bei 3,3-3,7. (Belitz-Grosch-Schieberle, Lehrbuch der Lebensmittelchemie, Springer-Verlag, 2001)

Gemäß einer weiteren Ausführungsform weisen die gemäß der Erfindung hergestellten Backwaren eine Ausbreitungsrate von 1,5-3, vorzugsweise 1,8-2,5 auf.

Gemäß einer weiteren Ausführungsform zeigte sich, dass obwohl sowohl wasserlösliche als auch wasserunlösliche Pentosane eine hohe Wasserbindekapazität besitzen, es vorteilhaft ist wasserlösliche Pentosane in den oben erwähnten Backmischungen einzusetzen und/oder den Anteil an wasserlöslichen Pentosanen in den obenerwähnten Backmischungen zu erhöhen.

Die Wasserlöslichkeit der Pentosane hängt von der Kettenlänge, dem Substitutionsgrad und den vorherrschenden Bindungen ab und wird somit durch enzymatischen Abbau verändert. Zum Beispiel spaltet L-Arabinofuranosidase die Arabinoseeinheiten ab, Endo-Xylanase wirkt depolymerisierend und Xylosidase spaltet Xylose vom reduzierenden Ende her ab. Die Wasserlöslichkeit von Pentosanen hängt aber auch vom Grad ihrer Quervernetzung über Diferulate ab.

Es ist somit möglich den Anteil der wasserlöslichen Pentosane in der Backmischung durch die Einwirkung von Säure und Enzymen, die zugesetzt werden oder die z.B. durch den Zusatz von Sauerteig und/oder die Gärung mit Milchsäurebakterien entstehen, zu erhöhen.

Daher werden gemäß einer weiteren Ausführungsform zu den oben erwähnten Backmischungen Pentosan-abbauende Enzyme zugesetzt, die ausgewählt sind aus der Gruppe bestehend aus Xylanase, Arabinofuranosidase, Endo-Xylanase und Xylosidase . Da die Enzyme während der Knet- und Ruhezeit aktiv sind und den Anteil der wasserlöslichen Pentosane erhöhen, zeigt sich eine erkennbare Verbesserung der mit der erfinderischen Backmischung hergestellten Brote und insbesondere eine Verbesserung betreffend das Brotvolumen.

Sofern gemäß einer weiteren Ausführungsform in den oben erwähnten Backmischungen Sauerteig zugesetzt wird, um den Anteil der wasserlöslichen Pentosane weiter zu erhöhen, ist es bevorzugt, aber in keinem Fall limitierend, eine Sauerteigstarterkultur bestehend aus z.B. *Lactobacillus plantarum, L.fermentum, L.paracasei, L.paralimentarius, L.helveticus, Leuconostoc argentinum* und *Saccharomyces pastorianus* einzusetzen.

Die Backmischung gemäß der Erfindung ist insbesondere geeignet um mit Sauerteigstartern oder angesetztem Sauerteig versetzt zu werden und in den dem Fachmann bekannten Sauerteigführungen zur Herstellung von verschiedenen Broten eingesetzt zu werden.

Bei üblicher Gärzeit von 12-24 Stunden verändert sich der Zustand der Pentosane und verschiebt sich zugunsten der wasserlöslichen Pentosane, wodurch eine weitere Verbesserung der mit der erfinderischen Backmischung hergestellten Brote und insbesondere eine Verbesserung betreffend das Brotvolumen erzielt wird.

Die mit der erfindungsgemäßen Backmischung hergestellten Brotbackwaren grenzen sich deutlich von den handelsüblichen glutenfreien Produkten ab, da sie echten Brotcharakter haben, nämlich eine krosse Krume, intensiven Brotgeschmack und eine mit Roggenmischbrot vergleichbare Struktur. Die unter Verwendung von Sauerteig mit der angemeldeten Backmischung erzeugten glutenfreien Backwaren zeichnen sich, neben der verbesserten Brotstruktur, auch durch eine verbesserte Haltbarkeit und intensiveren Brotgeschmack aus.

Darüber hinaus sind die mit der erfindungsgemäßen Backmischung hergestellten Backwaren bei verminderter Wasserzufuhr während der Teigherstellung freigeschoben backbar, denn die Teigkonsistenz kann vom Fachmann so eingestellt werden, dass sie zu Laiben formbar und ohne zu hart zu werden, beim Backen nicht zu Fladen zerläuft. Zusätzlich erweist sich der hohe Pentosangehalt als ernährungsphysiologisch besonders für Zöliakiepatienten als vorteilhaft, da Pentosane vom menschlichen Verdauungssystem nicht spaltbar und damit nicht verwertbar sind, sondern als Ballaststoffe die Darmgesundheit fördern.

Die mit den oben erwähnten Backmischungen hergestellten glutenfreien Backwaren weisen einen Pentosangehalt von zwischen 0,1-25%, vorzugsweise 6-10%, vorzugsweise 8-15%, vorzugsweise 9-18%, sowie einen Stärkegehalt von zwischen 25-70%, vorzugsweise 50-65%, vorzugsweise 55-60%, und optional einen Proteingehalt von zwischen 5-20%, vorzugsweise 6-10%, vorzugsweise 8-9% auf, wobei die verschiedenen Bereichsangaben zum Pentosangehalt, Stärkegehalt und optionalem Proteingehalt frei kombinierbar sind und durch geeignete Rezepturen, die der Fachmann anhand der Ausgangsstoffe errechnen kann, eingestellt werden können.

Darüber hinaus sind Backwaren die aus der angemeldeten Backmischung hergestellt wurden dadurch zu erkennen, dass die hergestellten glutenfreien Backwaren eine Gesamtmenge von mindestens 0,1-25%, vorzugsweise 0,1-2,5% , weiter vorzugsweise 0,1-5%, weiter vorzugsweise 1-10% weiter vorzugsweise 1,5-15%, weiter vorzugsweise 1,5-20% , weiter vorzugsweise 2,5-25% oder weiter vorzugsweise 2-20% pro kg aufweisen, wobei diese Pentosangehalte frei kombinierbar mit den oben angegebenen Protein- und Stärkegehalten vorliegen können.

Gemäß weiterer Ausführungsformen können die mit den oben erwähnten Backmischungen hergestellten glutenfreien Backwaren zur Geschmacksvarianz weitere Inhaltsstoffe z.B. Körner (Sonnenblumenkerne, Kürbiskerne, Leinsamen, Nüsse) und Sprossen und/oder diverse Brotgewürze enthalten.

### KURZE BESCHREIBUNG DER FIGUREN

**Figur 1** zeigt das Ergebnis einer Textur Profil Analyse zur Charakterisierung von Krumentexturen. Wie aus der Abbildung zu erkennen ist, zeigen im Handel erhältliche glutenfreie Brote eine hohe Krumenhärte und verfügen nicht über die für Weizen- und Roggen, bzw. Roggenmischbrote übliche hohe Elastizität und Weichheit. Es wird aufgrund des abgeteilten Kurvenverlaufes des handelsüblichen glutenfreien Schnittbrotes deutlich, dass eine sehr feste und brüchige Krumenstruktur vorliegt. Im Vergleich dazu ist das Roggenmischbrot (85:15, Roggen:Weizen) weicher und hat eine höhere Elastizität. Das erfindungsgemäß hergestellte Brot zeigt einen ähnlichen Verlauf in der Texturprofilanalyse (TPA) wie ein Roggenmischbrot.
**Figur 2** zeigt Misch-Brötchen mit Mischung B
**Figur 3** zeigt ein erfindungsgemäßes Brot ohne Sauerteig (a) sowie ein erfindungsgemäßes Brot mit 30 % der Mehlmenge versäuert (b).
**Figur 4** zeigt das Ergebnis einer Standardbrotmischung auf der Basis von Leinsamenmehl (entfettet) mit TA 182 (a) sowie das Ergebnis einer Standardbrotmischung auf der Basis von Leinsamenmehl (entfettet) mit TA 195 (b).
**Figur 5** zeigt drei freigeschobene glutenfreie Brote auf Basis von Leinsamen (links), Quinoamehl und Kleie (mitte), Reiskleie (rechts).
**Figur 6** zeigt die Zunahme des spezifischen Brotvolumens in Abhängigkeit zur Pentosanmenge, wobei in Figur 6a der Literaturwert, mit 22,3% Pentosan im entfetteten Leinsamenmehl, zugrunde gelegt wurden und in Figur 6b die Messwerte nach dem Hashimoto-Pentosanbestimmungsverfahren derselben Teigzusammensetzungen wie in Figur 6a. dargestellt sind. Zur Erstellung der verschiedenen Teige wurde jeweils die Mischung B des Beispieles 1 in der Menge des zugegebenen Anteiles an entfettetem Leinsamenmehles verändert. Der zugrunde gelegte Literaturwert für den Pentosangehalt in entfettetem Leinsamenmehl beträgt 22,3%, gemessen wurden nach Hashimoto allerdings nur 2,5%.

Weitere Vorteile und Anwendungsmöglichkeiten der vorliegenden Erfindung werden nachfolgend anhand von Ausführungsbeispielen mit Bezug auf die Figuren dargestellt.

### AUSFÜHRUNGSBEISPIELE

Für die nachfolgenden Rezepturen und Analysen wurde immer das hier beschriebene Standard-Herstellungsverfahren gewählt.

Dazu wurden die Rohstoffe abgewogen und in einen Spiralkneter eingewogen. Die Knetzeit beträgt 5 Minuten. Die Teige werden hierbei erst 5 Minuten langsam (30Hz) und anschließend 10 Sekunden schnell (55Hz) geknetet. Anschließend werden die Teige zu jeweils 1000g abgewogen. Die Arbeitsplatte wird mit Kartoffelstärke eingestaubt, damit die Teige beim Rundwirken nicht an der Arbeitsplatte haften bleiben.

Anschließend kommen die Brote bei 85% relativer Luftfeuchtigkeit und 32°C für 40 Minuten auf Stückgare. Der Backprozess bei 230°C dauert 60 Minuten. Möglich ist außerdem, den Backprozess zu unterteilen (Anfangsbacktemperatur T=240°C, Backtemperatur T=220°C). Beim Einschieben der Brote, sind die Brote stark zu beschwaden. Das verhindert, bzw. minimiert das Aufreißen der Krumenoberfläche.

Die Brote kühlten 24h ab bevor sie physikalisch/chemisch untersucht wurden.

In den nachfolgend beschriebenen Rezepturen für die Backmischung für glutenfreie Backwaren wird das Verhältnis von Pentosan zu Stärke auf Verhältnisse von Pentosan: Stärke von 1:5, 1:7, 1:10, 1:13,5, 1:15, 1:20, 1:25 und 1:30 unter Verwendung von glutenfreien Rohstoffen eingestellt. Hiermit wird eine Backmischung bereitgestellt werden, die es erlaubt glutenfreies Brot zu backen, ohne dass Backmittel, bzw. Hydrokolloide verwendet werden. Es ist darüber hinaus von Wichtigkeit eine Teigqualität zu erzeugen, die es erlaubt freigeschobene Brote zu backen.

### Beispiel 1:

Grundsätzlicher Aufbau der Backmischung eingestellt auf rechnerisch 4-10 % Pentosan (bezogen auf die Literaturangaben) und 45-65% Stärke
**Mischung A**
   42% entfettetes Rapsmehl
   42% Maisstärke
   16% Bohnenmehl
**Mischung B**
   42% entfettetes Leinsamenmehl
   42% Kartoffelstärke
   16% Bohnenmehl
**Mischung C**
   74% Quinoamehl
   19% Weizenstärke, glutenfrei
   7% Lupinenmehl
**Mischung D**
   42% entfettetes Sonnenblumenkernmehl
   42% Reisquellmehl
   7% Sojamehl

### Misch-Brötchen mit Mischung B (Fig.2)

Es werden 700g Mischung B mit 300g Maismehl, 30g Bäckerhefe und 20g Salz bei einer TA von 200 im Spiralkneter, unter 5 Minuten langsamen Rührens, zu einem Teig verarbeitet. Anschließend werden ca. 80g -100g des Teiges zu Teiglingen rund gewirkt. Anschließend kommen die Teiglinge für 30 Minuten bei 31°C und 85% relativer Luftfeuchtigkeit auf Gare und werden anschließend bei Schwadengabe für ca. 30 Minuten bei 230°C Ober- und Unterhitze gebacken.

### Hamburger Buns mit Mischung A

Zur Herstellung von Hamburger Buns werden 600g von Mischung A mit 400g Maisstärke, 140g Zucker, 125g Maismehl, 70g Fett, 10 g Natriumstearoyl-2-lactylat, 50g Bäckerhefe, 20g Salz bei einer Teigausbeute von TA 165 im Spiralkneter, unter 5 Minuten langsamen Rührens, zu einem Teig verrührt. Der Teig ruht nun für 10 Minuten, bevor jeweils 100g des Teiges rund gewirkt werden. Die Teigkugeln werden auf ein Hamburger Bun Blech gelegt und für 1 Stunde bei 36°C und 85% relativer Luftfeuchtigkeit auf Gare gestellt. Im Etagenofen werden diese schließlich unter anfänglicher Schwadengabe, bei 250°C Unterhitze und 240°C Oberhitze für 15-20 Minuten gebacken.

### Toastbrot mit Mischung C

Es werden 1000g Mischung C, wovon 10% mit Reissauerteig Starter versäuert wurden, mit 50g Bäckerhefe, 50g Fett, 30g Vollmilchpulver, 20g Salz und 20g Zucker bei einer TA von 160 im Spiralkneter, unter 5 Minuten langsamen Rührens, zu einem Teig verarbeitet. Anschließend werden die Teige zu jeweils 1200g in Toastbrotkästen (Tiefe 9 cm, Breite innen: 10,5cm, Länge innen: 23cm) eingewogen. Nun kommen die Teige für 30 Minuten bei 31°C und 85% relativer Luftfeuchtigkeit in die Gärkammer und werden anschließend bei anfänglicher starker Schwadengabe für 60 Minuten bei 230°C Ober- und Unterhitze gebacken.

### Muffins mit Mischung A

220g Fett, 220g Zucker, 8g Vanillinzucker, 3 Eier, 500g Mischung D, 30g Backmittel und 200ml Milch werden zu einem Teig verrührt. Die Teige in vorher eingefettete Muffin-Backformen füllen und bei 180°C Ober und Unterhitze im Backofen für 15-20 Minuten backen.

Für alle mit den Mischungen A-C hergestellten Backwaren, kann eine verbesserte, mittelgroße porige Brotstruktur erhalten werden

### Beispiel 2

### Brötchen zum schnellen Backen in der Mikrowelle

30 g einer Mischung bestehend aus 62,5 % Mischung B, 26 % Reismehl, 11 % getrockneter Quinoasauerteig, 1 % Salz und 1,5 % Natriumhydrogencarbonat) werden mit 30 ml Wasser in einem Mikrowellen-geigneten Gefäß zu einem Teig verrührt und anschließend bei 600 Watt in der Mikrowelle für 1,5 min gebacken. Das Aroma resultiert hierbei hauptsächlich aus dem getrockneten Sauerteig. Größere Portionen sind ebenfalls möglich

### Beispiel 3:

Grundsätzlicher Aufbau der Backmischung eingestellt auf 2-8 % Pentosan (rechnerisch bezogen auf die Literaturangaben) und 25-55% Stärke

### Brotrezeptur Typ "Roggenmischbrot" (Mischung E)

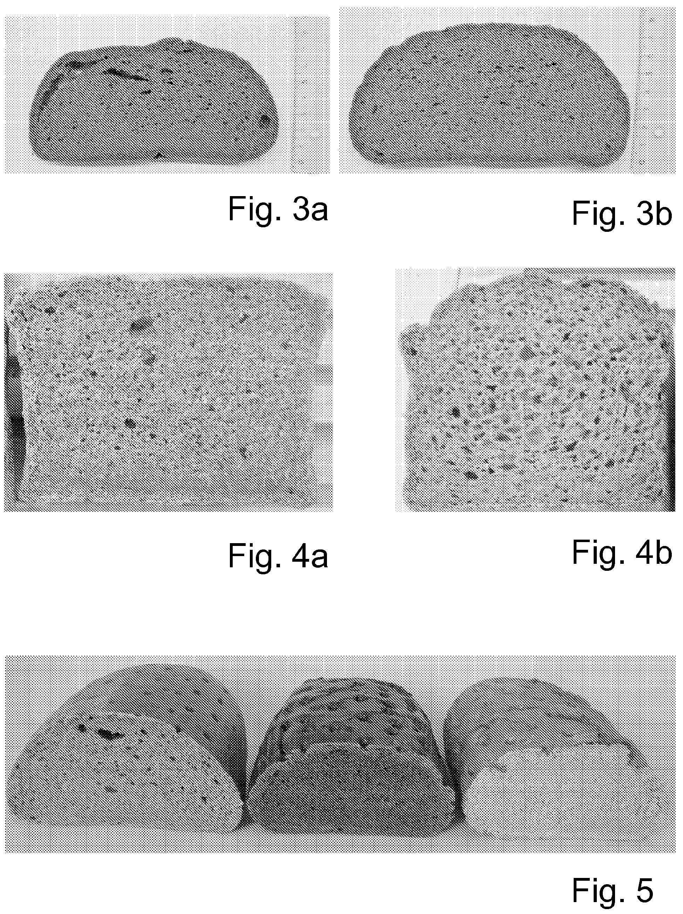

Zur Verhinderung des Abbackens der Kruste und eines Klitschstreifen wird 30 % der Mehlmenge versäuert (Fig. 3a - ohne Säuerung, Fig 3b - 30 % der Mehlmenge versäuert, Einstufenführung 18 h bei 28°C, Teigausbeute 250)
70 % Mischung B (aus Beispiel 1)
30 % Reismehl
2 % Salz
3 % Hefe
**Brotteigausbeute: 220**

Die Rezepturbestandteile werden abgewogen und 5 min langsam geknetet. Nach einer Teigruhe von 10 min wird der Teig geteilt, aufgemacht und in Gärkörbe gelegt. Nach ca. 40 min Gare bei 32°C (85 % r.F) werden Teigstücke gewendet, geigelt und geschoben. Die Backofentemperatur ist auf 230 °C Oberhitze und 240°C Unterhitze eingestellt. Es erfolgt eine starke Beschwadung. Nach 10 Minuten wird die Ofentemperatur jeweils auf 210 °C (Ober-Hitze und Unter-Hitze) reduziert. Die Backzeit beträgt 60 Minuten. Der Brotsäuregrad bei 30 % Versäuerung beträgt 8,3.

### Mischung F

37 % Quinoamehl
37 % Quinoakleie
19 % Weizenstärke (glutenfrei)
7 % Lupinenmehl
Backen TA160 für freigeschobenes Brot, im Kasten mehr

### Mischung G

70 % Reiskleie
22 % Maisstärke
8 % Kichererbsenmehl
Brot TA176 für freigeschobenes Brot

Für alle mit den Mischungen E-G hergestellten Backwaren, kann eine deutliche verbesserte Brotstruktur und verbessertes Volumen ermittelt werden. Hervorzuheben ist die mit Mischung B hergestellte Roggenmischbrot-ähnliche Backware, die auch eine verbesserte Krume hat. Siehe auch Ergebnisse der TPA in Figur 1, sowie 3b.

Weiterhin zeigen die Daten der analytischen Mehlbestimmung, dass die Rezepturen die Vorgaben gemäß der vorliegenden Erfindung erfüllen. Ermittelt wurde hierzu neben dem Stärkegehalt (ICC-Standard 168) und dem Pentosangehalt (Hashimoto et al., 1987) auch die Verkleisterungstemperatur bzw. das Verkleisterungsmaximum, dazu wurde der/das nachfolgend beschriebene Amylograph-Amylogramm eingesetzt.

Die Verkleisterungseigenschaften einer Mehl-Wasser Suspension im Verlaufe des Erhitzens können, dargestellt an der Veränderung der Viskositäten, mittels Rotationsviskosimeter, nach ICC-Standard Nr. 126/1, untersucht werden. Eine Mehl Wasser Suspension wird in einem Messtopf erhitzt. Dieser rotiert bei konstanter Geschwindigkeit mit einer konstanten Aufheizrate (1,5 k/min). Die Einwaage der Mehle richtet sich nach den Vorgaben für Roggenmehl. Es werden jeweils 80g eingewogen. Die Viskosität des entstehenden Gels wird vom Rotationsviskosimeter kontinuierlich registriert.

Die während der Messung im Amylogramm ermittelte maximale Viskosität zeigt, welche Verkleisterungseigenschaften der Suspensionen vorliegen und gibt daher Aufschluss über die Beschaffenheit und Wasseraufnahmefähigkeit der Pentosane, sowie über das Backverhalten der Mehle.

| | Gemessene Gesamtpentosan %/TM | Stärke %/TM | Errechnetes Stärke:Pentosan Verhältnis | Verkleisterungstemperatur (Amylogramm, °C) | Verkleisterungsmaximum (Amylogrammeinheiten) |
|---|---|---|---|---|---|
| Roggenvollkornmehl | 2,2 | 46,8 | 21,3 | 69,87 | 890 |
| Mischung A | 2,2 | 34,8 | 15,8 | 79,2 | 828 |
| Mischung B | 2,8 | 26,9 | 9,6 | 73,8 | 2906 |
| Mischung C | 2,6 | 52,7 | 20,2 | 92,4 | 1548 |
| 70 % Reiskleie, 22 %Maisstärke, 8 % Kichererbsenmehl | 2,5 | 22,1 | 8,84 | 96,0 | 129 |
| 70 % Reiskleie, 22% Kartoffelstärke, 8 % Bohnemehl | 2,8 | 18,8 | 6,7 | 90 | 373 |

### Beispiel 4: Reiskleie als alternative Pentosanquelle

Reiskleie als alternative Pentosanquelle für glutenfreies Brot (frei geschoben) Herstellung von glutenfreien Broten auf Basis der Ausgangsrezeptur mit gemahlenem Leinsamenpresskuchen (versäuert und unversäuert) im Vergleich zu Broten aus Reiskleie (versäuert und unversäuert), mit und ohne Zusatz von Sauerteig.

### Sauerteigführung:

Die Sauerteige wurde jeweils insgesamt 48 Stunden bei 28°C geführt. Anstellgut BÖCKER Reinzucht Sauerteig Reis.

| 1 | 2 | 3 | 4 |
|---|---|---|---|
| Leinsamenmehl STD | 40% versäuert (Leinsamenmischung) | Reiskleie STD | 40% versäuert (Reiskleiemischung) |
| Rezeptur: | Rezeptur: | Rezeptur: | Rezeptur: |
| - 628,5g Kartoffelstärke | - 318,8g Kartoffelstärke | - 331,05g Kartoffelstärke | - 306,44g Kartoffelstärke |
| - 628,5g | - 483,26g Leinsamenpresskuchen | - 1042,5 g Reiskleie | - 972,24 g Reiskleie |
| Leinsamenpresskuchen | (gemahlen) | -126,15 g | - 116,79g |
| (gemahlen) | - 122,19g Bohnenmehl | Bohnenmehl | Bohnenmehl |
| - 240 g Bohnenmehl | - 42 g Hefe | - 42 g Hefe | - 42 g Hefe |
| - 42 g Hefe | - 30g Salz | - 30g Salz | - 30g Salz |
| - 30g Salz | - 1243,86 ml Wasser | - 1308,42 g Wasser | - 1238,79 ml Wasser |
| - 1800 g Wasser | + 600g ST | | + 220g ST |
| (TA 220) | (TA 234) | (TA 187) | (TA 196) |
| | Sauerteig | | Sauerteig |
| | 341,2g Kartoffelstärke | | 341,2g Kartoffelstärke |
| | 160 g Leinsamen | | 974 g Reiskleie |
| | 129,78 g Bohnenmehl | | 129,78 g Bohnenmehl |
| | 63 g Reisstarter | | 63 g Reisstarter |
| | 830g Wasser | | 1575g Wasser |
| | → TA 231 | | → TA 350 |
| | T = 28°C | | T = 28°C |
| → Kasten und frei geschoben | → Kasten und frei geschoben | → Kasten und Brötchen | → Kasten und Brötchen |

**Sauerteiganalytik**

| | pH-Wert | Säuregrad Sr° |
|---|---|---|
| Sauerteig 1 (Leinsamen) nach 24h | 4,52 | 12,8 |
| Sauerteig 2 (Kleie) nach 24 h | 4,92 | 22,8 |
| Sauerteig 1 nach 48h | 4,48 | 14,0 |
| Sauerteig 2 Nach 48h | 4,45 | 28,45 |

**Auswertung**

| Brot | *v* (ml/g) |
|---|---|
| 1 Leinsamen ohne Sauerteig | 1,35 |
| 2 Leinsamen mit Sauerteig | 1,30 |
| 3 Reiskleie ohne Sauerteig | 1,30 |
| 4 Reiskleie mit Sauerteig | 1,38 |

### Beispiel 5: Weitere Pentosanquellen

Quinoamehl + Quinoakleie, Reiskleie, Leinsamenpresskuchen (gemahlen) werden so in Rezepten zusammengestellt, dass theoretischer Weise in jedem Rezept 100g Pentosan vorhanden ist (und das Stärke zu Pentosan-Verhältnis etwa 80:10 beträgt) weiterhin sind 8-9 g Protein vorhanden

### Rezept 1

630g Leinsamenpresskuchen (gemahlen) (42%)
630g Kartoffelstärke (42%)
240g Bohnenmehl (16%)
45g Hefe (3% auf Mehl- Basis (a.M-B))
30g Salz (2% a. M-B)
+1800g Wasser (TA 220)

### Rezept 2

1110g Quinoamehl (74%) (555Quinoamehl (37%)+555Quinoakleie (37%))
280,5g Kartoffelstärke (19%)
100,8g Bohnenmehl (7%)
45g Hefe (3% a. M-B)
30g Salz (2% a. M-B)
+900g Wasser (TA160)

### Rezept 3

1050g Reiskleie (70%)
330g Kartoffelstärke (22%)
125,4g Bohnenmehl (8%)
45g Hefe (3% a. M-B)
30g Salz (2% a. M-B)
+1139g Wasser (TA 176)

Die Teigausbeute eignet sich nicht für alle Rohstoffe gleichmäßig ebenso ist die Wasseraufnahmefähigkeit unterschiedlich und muss angepasst werden. Quinoamehl und Quinoakleie ergeben die vergleichsweise beste Krumentextur (Sehr weiche und gleichzeitig sehr elastische Krume) (Fig 5).

## Patentansprüche

1. Glutenfreie Brotbackmischung enthaltend wenigstens eine glutenfreie Stärkequelle und wenigstens eine glutenfreie Pentosanquelle, wobei das Verhältnis von Stärke:Pentosane 8:1 bis 30:1 entspricht und die Pentosanquelle ausgewählt ist aus der Gruppe bestehend aus synthetisch erzeugten Pentosanen, aus Pflanzenteilen aufgereinigten Pentosanen, aus vermahlenen Ölsamen, nämlich Maisölpressrückstände, Rapsölpressrückstände, Sonnenblumenölpressrückstände, und Leinölpressrückständen, aus vermahlenen Pflanzenteilen mit hohem Pentosangehalt, nämlich Maisschalen, Maiskleie, Reisspelzen, Sonnenblumenkernen, Leinsamen, Hanfsamen, Sojabohnenmehl, Kaffeebohnenmehl und Karottenmehl, und aus vermahlenen Ölpflanzenteilen mit hohem Pentosangehalt sowie Mischungen aller voranstehend Genannten und die Pentosanquelle eine Feinzerkleinerung von < 500 µm aufweist.

2. Glutenfreie Brotbackmischung gemäß Anspruch 1 **dadurch gekennzeichnet, dass** die Stärkequelle ausgewählt ist aus der Gruppe bestehend aus vermahlener Maisstärke, Kartoffelstärke auch Süßkartoffelstärke, Reisstärke, Erbsenstärke, Maniokstärke, Sorghumstärke sowie Mischungen derselben.

3. Glutenfreie Brotbackmischung gemäß einem der Ansprüche 1 und 2 **dadurch gekennzeichnet, dass** die Brotbackmischung eine bestimmbare Gesamtmenge von wenigstens 25% Stärke enthält.

4. Glutenfreie Brotbackmischung gemäß einem der Ansprüche 1 bis 3 **dadurch gekennzeichnet, dass** die Brotbackmischung eine Gesamtmenge von 0,1 - 25% Pentosan pro kg Brotbackmischung enthält.

5. Glutenfreie Brotbackmischung gemäß einem der Ansprüche 1 bis 4 **dadurch gekennzeichnet, dass** die Brotbackmischung zusätzlich wenigstens eine glutenfreie Proteinquelle enthält, welche ausgewählt ist aus der Gruppe bestehend aus vermahlenen Lupinen, vermahlenen Kichererbsen, vermahlenen Bohnen und vermahlenen Ackerbohnen, Milchpulver, Molkepulver, Trockenei sowie Mischungen derselben.

6. Glutenfreie Brotbackmischung gemäß einem der Ansprüche 1 bis 5 **dadurch gekennzeichnet, dass** die vermahlenen Zutaten eine Feinzerkleinerung von <500 µm aufweisen.

7. Glutenfreie Brotbackmischung gemäß einem der Ansprüche 1 bis 6 **dadurch gekennzeichnet, dass** zusätzlich Pentosan-abbauende Enzyme oder Säure zugesetzt wird.

8. Glutenfreie Brotbackmischung gemäß einem der Ansprüche 1 bis 7 **dadurch gekennzeichnet, dass** zusätzlich Sauerteig zugesetzt wird.

9. Glutenfreie Brotbackmischung gemäß Anspruch 8 **dadurch gekennzeichnet, dass** der Sauerteig mit glutenfreiem Mehl angesetzt wird und Lactobacillen enthält, die ausgewählt sind aus der Gruppe bestehen aus *Lactobacillus plantarum, L.fermentum, L.paracasei, L.paralimentarius, L.helveticus, Leuconostoc argentinum* und *Saccharomyces pastorianus* und Mischungen derselben.

10. Glutenfreie Brotbackwaren hergestellt aus der glutenfreien Brotbackmischung gemäß einem der Ansprüche 1 bis 9.

11. Glutenfreie Brotbackwaren gemäß Anspruch 10 **dadurch gekennzeichnet, dass** sie einen Pentosangehalt von zwischen 0,1-25%, sowie einen Stärkegehalt von zwischen 25-70%, und optional einen Proteingehalt von zwischen 5-20% aufweisen.

12. Glutenfreie Brotbackwaren gemäß Anspruch 11 **dadurch gekennzeichnet, dass** Brotgewürze und/oder Körner enthalten sind.

13. Verfahren zur Herstellung glutenfreier Brote **dadurch gekennzeichnet, dass** die Brotbackmischung gemäß der Ansprüche 1- 9 verwendet wird und die Brote freigeschoben gebacken werden, wobei ein spezifisches Brotvolumen von mindestens 1,2 ml/g erreicht wird und bei den freigeschobenen Broten ein Breite-Höhe-Verhältnis von mindestens 1,5 erreicht wird.

14. Verfahren nach Anspruch 13, wobei die Backwaren in Portionsgröße in der Mikrowelle gebacken werden.

## Claims

1. A gluten-free bread baking mix comprising at least one gluten-free starch source and at least one gluten-free pentosan source, wherein the ratio of starch:pentosans corresponds to 8:1 to 30:1 and the pentosan source is selected from the group consisting of synthetically produced pentosans, pentosans purified from plant parts, from ground oil seeds, namely maize oil extraction residues, rapeseed oil extraction residues, sunflower oil extraction residues and linseed oil extraction residues, from ground plant parts with a high pentosan content, namely maize hulls, maize bran, rice husks, sunflower seeds, linseeds, hemp seeds, soybean flour, coffee-bean flour and carrot flour, and from ground oil plant parts with a high pentosan content, as well as mixtures of any of the aforementioned, and the pentosan source is finely size-reduced to <500µm.

2. The gluten-free bread baking mix of claim 1, **characterized in that** the starch source is selected from the group consisting of ground maize starch, potato starch including sweetpotato starch, rice starch, pea starch, manioc starch, sorghum starch and mixtures thereof.

3. The gluten-free bread baking mix of either of claims 1 and 2, **characterized in that** the bread baking mix comprises a determinable total amount of at least 25% starch.

4. The gluten-free bread baking mix of any of claims 1 to 3, **characterized in that** the bread baking mix comprises a total amount of 0.1-25% pentosan per kg of bread baking mix.

5. The gluten-free bread baking mix of any of claims 1 to 4, **characterized in that** the bread baking mix additionally comprises at least one gluten-free protein source selected from the group consisting of ground lupines, ground chickpeas, ground beans and ground field beans, milk powder, whey powder, dried egg and mixtures thereof.

6. The gluten-free bread baking mix of any of claims 1 to 5, **characterized in that** the ground ingredients are finely size-reduced to <500µm.

7. The gluten-free bread baking mix of any of claims 1 to 6, **characterized in that** pentosandegrading enzymes or acid are added.

8. The gluten-free bread baking mix of any of claims 1 to 7, **characterized in that** sourdough is added.

9. The gluten-free bread baking mix of claim 8, **characterized in that** the sourdough is prepared with gluten-free flour and comprises lactobacilli selected from the group consisting of *Lactobacillus plantarum, L. fermentum, L. paracasei, L. paralimentarius, L. helveticus, Leuconostoc argentinum* and *Saccharomyces pastorianus* and mixtures thereof.

10. Gluten-free bread products made from the gluten-free bread baking mix of any of claims 1 to 9.

11. The gluten-free bread products of claim 10, **characterized in that** they have a pentosan content of between 0.1-25% as well as a starch content of between 25-70%, and optionally a protein content of between 5-20%.

12. The gluten-free bread products of claim 11, **characterized in that** bread spices and/or grains are included.

13. A method for manufacturing gluten-free breads, **characterized in that** the bread baking mix of claims 1-9 is used and the breads are baked without pans, reaching a specific bread volume of at least 1.2 ml/g, and reaching a width-to-height ratio of at least 1.5 for the breads baked without pans.

14. The method of claim 13, wherein the baked goods are baked in serving size in a microwave oven.

## Revendications

1. Mélange sans gluten de préparation des pains contenant au moins une source d'amidon sans gluten et au moins une source de pentosane sans gluten, le rapport amidon:pentosane correspondant à de 8:1 à 30:1 et la source de pentosane étant sélectionnée à partir du groupe se composant des pentosanes produits synthétiquement, des pentosanes obtenus par purification d'éléments végétaux, de graines oléagineuses moulues, à savoir des tourteaux d'huile de maïs, des tourteaux d'huile de colza, des tourteaux d'huile de tournesol et des tourteaux d'huile de lin, d'éléments végétaux moulus à haute teneur en pentosane, à savoir des cosse de maïs, du son de maïs, des glumes de riz, des graines de tournesol, des graines de lin, des graines de chanvre, de la farine de soja, de la farine de café et de la farine de carottes, et de plantes oléagineuses moulues à haute teneur en pentosane ainsi que des mélanges de tous les composants nommés et la source de pentosane présentant un broyage fin de <500 µm.

2. Mélange sans gluten de préparation des pains selon la revendication 1, **caractérisé en ce que** la source d'amidon est sélectionnée à partir du groupe se composant de l'amidon de maïs, de la fécule de pomme de terre, aussi de la fécule de patate douce, de l'amidon de riz, de l'amidon de petits pois, de la fécule de manioc, de l'amidon de sorgho ainsi que de mélanges de ceux-ci.

3. Mélange sans gluten de préparation des pains selon une quelconque des revendications 1 et 2, **caractérisé en ce que** le mélange de préparation des pains contient une quantité totale définissable d'au moins 25 % d'amidon.

4. Mélange sans gluten de préparation des pains selon une quelconque des revendications 1 à 3, **caractérisé en ce que** le mélange de préparation des pains contient une quantité totale définissable de 0,1 à 25 % de pentosane par kg de mélange de préparation des pains.

5. Mélange sans gluten de préparation des pains selon une quelconque des revendications 1 à 4, **caractérisé en ce que** le mélange de préparation des pains contient par ailleurs au moins une source de protéines sans gluten, qui est sélectionnée du groupe se composant des lupins moulus, des pois chiches moulus, des haricots moulus et des féveroles moulues, du lait en poudre, du petit-lait en poudre, de l'oeuf en poudre ainsi que de mélanges de ceux-ci.

6. Mélange sans gluten de préparation des pains selon une quelconque des revendications 1 à 5, **caractérisé en ce que** les ingrédients moulus présentent un broyage fin de <500 µm.

7. Mélange sans gluten de préparation des pains selon une quelconque des revendications 1 à 6, **caractérisé en ce que** des enzymes ou de l'acide supplémentaires décomposant le pentosane sont additionnés.

8. Mélange sans gluten de préparation des pains selon une quelconque des revendications 1 à 7, **caractérisé en ce que** du levain supplémentaire est additionné.

9. Mélange sans gluten de préparation des pains selon la revendication 8, **caractérisé en ce que** le levain est préparé avec de la farine sans gluten et **en ce qu'**il contient des lactobacilles qui sont sélectionnés à partir du groupe se composant du *Lactobacillus plantarum, du L. fermentum, du L. paracasei, du L. paralimentarius, du L. helveticus, du Leuconostoc argentinum* et du *Saccharomyces pastorianus* ainsi que de mélanges de ceux-ci.

10. Aliments cuits panifiés sans gluten fabriqués à partir du mélange sans gluten de préparation des pains selon une quelconque des revendications 1 à 9.

11. Aliments cuits panifiés sans gluten selon la revendication 10, **caractérisés en ce qu'**ils présentent une teneur en pentosane comprise entre 0,1 et 25 %, ainsi qu'une teneur en amidon comprise entre 25 et 70 %, et en option une teneur en protéines comprise entre 5 et 20 %.

12. Aliments cuits panifiés sans gluten selon la revendication 11, **caractérisés en ce que** des épices de pain et/ou des grains sont compris.

13. Procédé en vue de la fabrication de pains sans gluten, **caractérisé en ce que** le mélange sans gluten de préparation des pains selon une quelconque des revendications 1 à 9 est utilisé et **en ce que** les pains sont cuits enfournés, un volume de pain spécifique d'au moins 1,2 ml / g étant atteint et pour les pains enfournés un rapport largeur-hauteur d'au moins 1,5 étant atteint.

14. Procédé selon la revendication 13, les produits de boulangerie étant cuits à taille de portion dans le four à micro-ondes.
